# EUROPEAN PATENT SPECIFICATION

(11) **EP 2 227 945 B1**
(45) Date of publication and mention of the grant of the patent: **04.01.2012**
(21) Application number: 10075084.3
(22) Date of filing: 25.02.2010
(51) Int. Cl.: A01K 1/01, A47L 9/00

(54) **Device for carrying out activities in a space in which contaminants may occur**
Vorrichtung zur Durchführung von Aktivitäten in einem Raum mit möglichem Auftreten von Kontaminanten
Dispositif pour effectuer des activités dans un espace dans lequel des contaminants peuvent se produire

(30) Priority: 11.03.2009 NL 1036699
(43) Date of publication of application: 15.09.2010
(73) Proprietor: Lely Patent N.V., 3147 PA Maassluis (NL)
(72) Inventor: Van den Berg, Karel, 2971 VB Bleskensgraaf (NL)
(74) Representative: Corten, Maurice Jean F.M.

(56) References cited:
- US-A- 4 968 878
- US-A1- 2006 047 364

## Description

### BACKGROUND OF THE INVENTION

The invention relates to a mobile device according to the preamble of claim 1

At activities in a device for carrying out activities in a space in which contaminants may occur, the functioning of a detector used by an above-mentioned device can decline in the course of time as a result of contaminants which are deposited on detecting surfaces and which are hit by dirt. In a stable, the contaminants will in particular consist of manure falling from an animal and manure splashing from the stable floor. In an exterior space, the contaminants will consist of manure (pasture) and soil material (field).

In the past, some solutions for this problem have been proposed.

In one type thereof, external facilities are used.

EP 0.688.498 describes a milking robot with a robot arm on which a detector with an optical (laser) sensor is mounted to determine the position of the teats of a cow to be milked. The lens of the sensor is screened by a piece of glass whose outer surface can be cleaned automatically by a sponge disposed on the inner side of a sliding hood which covers the piece of glass in the non-used position.

EP 0.716.566 also shows a milking robot with a robot arm on which a detector with an optical (laser) sensor is mounted to determine the position of the teats of a cow to be milked. The piece of glass which screens the sensor can be cleaned with the aid of a stationary sprayer and blower. Another known milking robot uses a stationary sponge to clean the piece of glass of a detector.

A disadvantage thereof is that the cleaning is limited to a particular area, and that facilities have to be provided in the surroundings, such as a milking box or a stable. These facilities occupy space and can be susceptible of being damaged.

In another type, which is indeed capable of cleaning autonomously, facilities are provided on the device itself. These are complex and consequently susceptible of interference.

NL 1033591 describes an unmanned self-propelled and self-steering device for removing manure, which is provided with detection means for recognizing heaps of manure on a floor and animals or legs of animals. The optical sensor is protected by a flat front side, made of synthetic material, of an exit optical device. This optical device, or piece of glass, can become contaminated. In order to reduce the risk of contamination, the device is provided with means for retracting and extending the sensor in an active manner.

US 4.843.561 describes a harvesting machine which is provided with a CCD camera or the like for recognizing an object to be harvested. The lens is screened by a piece of glass, which can be cleaned by a sweeper to be activated by means provided on the machine and a sprayer, possibly after it has been established that a certain degree of contamination has been reached.

Both US 4968878 and US 2006/0047364 by disclose a device according to the preamble to the preamble of claim 1.

### SUMMARY OF THE INVENTION

It is an object of the invention to provide a device of the type mentioned in the preamble, in which the cleaning of the outer surface of the detector does not need special external facilities.

It is an object of the invention to provide a device of the type mentioned in the preamble, in which simple means suffice for the cleaning of the outer surface of the detector.

It is an object of the invention to provide a device of the type mentioned in the preamble, in which means with a low degree of susceptibility of interference suffice for the cleaning of the outer surface of the detector.

In order to achieve at least one of these objects, the invention, from one aspect, provides an unmanned self-propelled device for carrying out activities in a space in which contaminants may occur, wherein the device comprises a frame and means for moving the device through the space, wherein the device further comprises a detector for detecting a body in a detection range of the detector, which detector is provided with an outer surface which is exposed and which is permeable for the detection function, wherein the frame is provided with screening means which are stationary with respect to said outer surface for keeping said outer surface free from contaminants, wherein the screening means are provided with at least one screening member which is located in the detection range and has a first intercepting surface for intercepting contaminants moving towards the outer surface, wherein the detector has a detector centre line which intersects the outer surface, wherein the first intercepting surface, when viewed in at least one, in particular vertical, sectional plane, which contains the detector centre line, extends along a line which diverges with respect to the detector centre line in a direction away from the detector. This reduces in an effective manner the chance of contaminants hitting the outer surface, near the detector, without the intercepting surface excessively limiting the detection field of the detector.

It is observed that by detector are also meant sensors which are adapted to detect a body as described in the foregoing.

In a further development thereof, the screening means comprise a number of screening members, wherein the first intercepting surfaces of the screening members, when viewed in said sectional plane which contains the detector centre line, are arranged along one or more lines which diverge with respect to the detector centre line, in a direction away from the detector. This increases the hitting chance for splashing dirt particles, without noticeably limiting the detection field of the detector.

In a first further development thereof, at least two of the first intercepting surfaces, in said sectional plane, are in alignment with each other on a line which diverges with respect to the detector centre line, in a direction away from the detector.

In a second further development thereof, at least two of the first intercepting surfaces, in said sectional plane, are located on different lines which diverge with respect to the detector centre line, in a direction away from the detector. In one embodiment, said lines are located on both sides of the detector centre line; in another embodiment, said lines are located on the same side of the detector centre line.

The diverging lines can intersect each other in a point, which point is preferably located on the detector centre line.

The hitting chance for dirt particles can also be increased if the screening means comprise a number of screening members, wherein the first intercepting surfaces of at least two screening members occupy a mutually different angular position with respect to the detector centre line, when viewed in a plane of projection perpendicular to the detector centre line.

The screening means can comprise a number of screening members, wherein the intercepting surfaces of at least two screening members leave an interspace between them, by means of which, on the one hand, the space in front of the detector is kept open, and, on the other hand, splashing dirt particles are stopped.

In a further development of the device according to the invention, the screening member is provided with a second intercepting surface which is oriented substantially opposite to the first intercepting surface and which is preferably substantially identical thereto. In this case, a limitation of the detection field of the detector is further kept limited if the first and second intercepting surfaces, when viewed in at least one sectional plane which contains the detector centre line, are arranged along different lines which diverge with respect to the detector centre line, in a direction away from the detector.

In one embodiment, the screening members are lamella-shaped.

The first intercepting surface or the first intercepting surfaces can be oriented for intercepting upwardly moving contaminants. Such contaminants are, for example, caused by manure which falls on a floor and subsequently splashes up, following a ballistic trajectory. In relation to a highest point of the outer surface, in a compact embodiment, the first intercepting surface can be located below a horizontal plane which intersects the upper point.

Alternatively, the first intercepting surface or the first intercepting surfaces can be oriented for intercepting downwardly moving contaminants. The downward movement can be a continuation of said upward movement, according to a ballistic trajectory.

It is observed that a combination with two oppositely oriented intercepting surfaces on a screening member is possible, in which the first intercepting surface and the second intercepting surface, respectively, intercept downwardly moving and upwardly moving contaminants, respectively, or inversely.

In one embodiment of the device according to the invention, in which the outer surface has an upper point, the intercepting surface is disposed for intercepting contaminants moving upwardly towards the outer surface and is located below a horizontal plane which contains the upper point.

In one embodiment, the detector is optically active. In particular in the case of optical detection, cleanliness is required to prevent scattering or absorption of light. In this case, the detector can, for example, be a visual-optical camera or an infrared camera, whether or not 3D. The detector can also be based on another principle, such as ultrasonic, in which case emitted sound waves are intercepted.

In one embodiment, the device according to the invention is provided with a carrier for moving material over the stable floor, such as a feed slide or a manure slide.

The device can be self-steering. It is observed that by unmanned self-propelled and possibly self-steering device are meant both at least substantially autonomously travelling and possibly autonomously steering devices, whether or not programmed for this purpose, such as the Discovery manure slide of the registered trademark Lely, and devices in which the travelling and/or steering are/is remotely controlled. In both cases, a motor for the travelling of the device is provided in the device.

It is observed that from WO 00/70941 an autonomous working vehicle for stable or pasture is known, which is provided with a fixed hood which projects above a detector lens and which offers only limited protection, and is not protective against splashing up dirt particles. The lower surface of the hood can even form a reflection surface for splashing up dirt particles.

The aspects and features described in this description and the claims of the application and/or shown in the figures of this application may, where possible, also be used separately from each other. These separate aspects may be the subject of divisional patent applications related thereto. This holds in particular for the features and aspects which are described per se in the dependent claims.

### BRIEF DESCRIPTION OF THE FIGURES

The invention will be explained with reference to a number of exemplary embodiments shown in the accompanying figures, in which:
Figures 1A-C show an exemplary embodiment of a device according to the invention, in side view, top view and front view, respectively;
Figures 2A and 2B show two schematic arrangements of a screening according to the invention, in a cross-section according to a vertical longitudinal plane, and
Figure 3 shows another arrangement of a screening according to the invention, in a cross-section according to a vertical longitudinal plane.

### DETAILED DESCRIPTION OF THE FIGURES

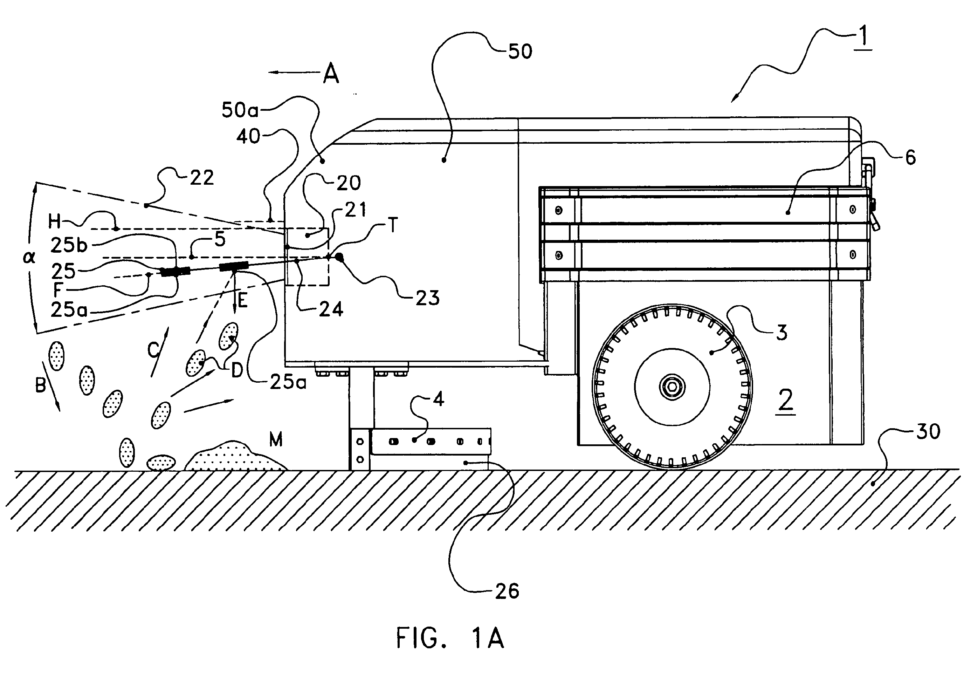

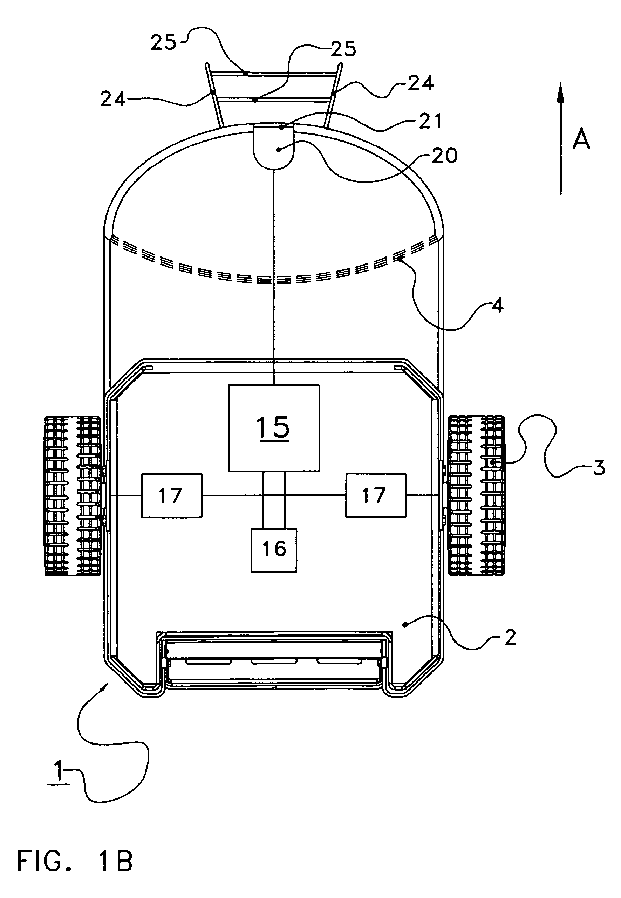

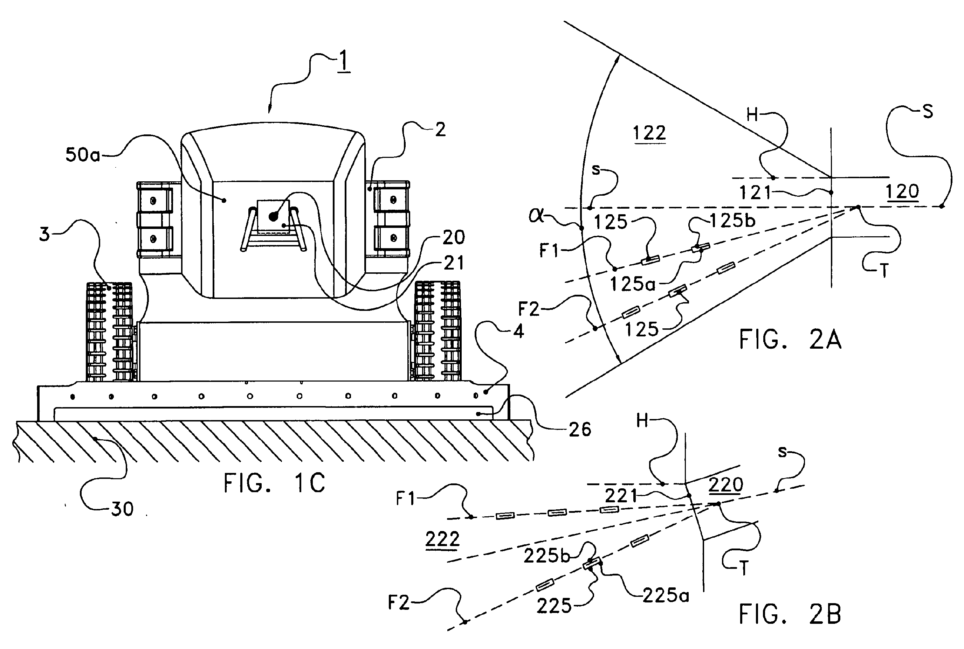

The device 1 shown in Figures 1A-C for removing manure from a floor 30 of a passageway of a stable comprises a relatively heavy, block-shaped concrete housing 2 with two wheels 3 and a manure slide 4 located below a hood 50. The manure slide 4 is concave with the hollow side oriented forwardly and is made of stainless steel with a polyurethane strip 26 at the lower edge, for sweeping contact with the floor 30. The device 1 is supported on the floor 30 by means of the wheels 3 and the manure slide 4. The housing 2 is provided on both sides with current collectors 6, by means of which an accumulator, included in the housing 2, can be charged at an external charging station, as used in the manure slide device which is offered by Lely (registered trademark) under the name Discovery (registered trademark).

The housing 2 accommodates a control unit 15 which is fed by the accumulator 16 and which controls, via a control line, a double electric motor 17, by means of which the wheels 3 can be driven individually. The control unit 15 is capable of being programmed remotely, so that the device 1 can follow autonomously a defined working route, in a repeating manner.

In the front side 50a of the hood 50 there is provided a detector or sensor device which is in operative connection with the control unit 15. The detector or sensor device is configured to detect objects which are located in front of the device 1, such as animals. In this example, the sensor device comprises a camera 20 by means of which images can be taken of the area in front of the device 1, which images can be stored for analysis and/or can be compared in the control unit 15 with reference images, after which, on the basis of the result of the comparison, the control unit controls the drives 17.

The camera 20 comprises a lens 21 whose outer surface or front surface is exposed and is in principle accessible for dirt. Dirt deposit on the front surface of the lens 21, however, can have a negative effect on the image taken by the camera. For dirt coming from above, such as secreted liquid or solid manure, there can be provided a canopy located outside the image field of the camera, as shown in dashed lines by reference numeral 40. A facility such as canopy 40 can worsen contamination of the lens 21, because upwardly moving dirt particles can bounce against the lower side of the canopy and then still get on the lens 21.

The observation area (detection range) 22 of the camera 20 extends in a vertical sectional plane at an angle α of, for example, 40 degrees The camera 20 has an image centre line (detector centre line) S. In the observation area there are arranged a number of screening members in the form of lamellas 25 which are held in fixed position by a holder facility 23,24. The lamellas 25, whose thickness is exaggerated in the drawing, have a lower surface 25a and an upper surface 25b. The lamellas 25 are substantially oriented along a line F which converges (towards the camera, or diverges away from the camera) with centre line S and intersects same in point T. If the surfaces 25a and 25b are parallel to each other, and the cross-section of the lamellas 25 is rectangular, the line F can be located in a central perpendicular plane of the lamellas 25. However, it is also possible to orient the surfaces 25a and 25b along own lines which converge mutually to said point T, in which case the lamellas 25 can approach a dashed line in the detection field of the camera. Owing to their position, the lamellas 25 are well accessible for cleaning.

In Figure 1A, the front surface of the lens 21 is vertical, an upper point of the upper edge being in an imaginary plane H, which is horizontal in this case. In this example, the shown lamellas 25 are below plane H and below centre line S.

Figure 1A shows a moment during operation of the device 1, when it is travelling in the forward direction A over the stable floor 30, to displace heaps of manure M by means of the manure slide 4 to a - non-shown - discharge passage in the floor 30. It may occur that an animal which is located in front of the device 1 produces manure which drops, for example, in the direction B. This manure can splash up in the form of drops D from the floor 30, direction C. These drops D could hit the lens 21, possibly via the lower surface of the canopy 40, and have a negative effect on the transparency of the lens 21, and thus on the quality and reliability of the recordings by the camera.

The (ballistic) trajectory of the drops D is interrupted, however, by the intercepting surface which is formed by the lower surface 25a of a lamella 25, so that the direction of the drop D is almost reversed, direction E, upto the floor 30, in the range of the manure slide 4. It is observed that the lamellas 25 are shown here only schematically and that the person skilled in the art will be able to determine the optimum design, number and position of the lamellas.

Figure 2A shows schematically an alternative arrangement of lamellas 125, located in the observation area 122, a number of lamellas 125 being located on a line F1 and a number of lamellas 125 on a line F2, the lines F1 and F2 converging with the centre line S and intersecting each other in point T. Also here, all lamellas 125 are located below the plane H and below the centre line S.

In Figure 2B, the front surface of the lens 21 is inclined forwards to some extent, so that the centre line S is oriented obliquely downwards. Within the observation area 222, there are arranged two groups of lamellas 225, one group above the centre line S and below the plane H, along the line F1, and the other group along line F2, below the centre line S. The lines F1, F2 and S intersect each other in point T.

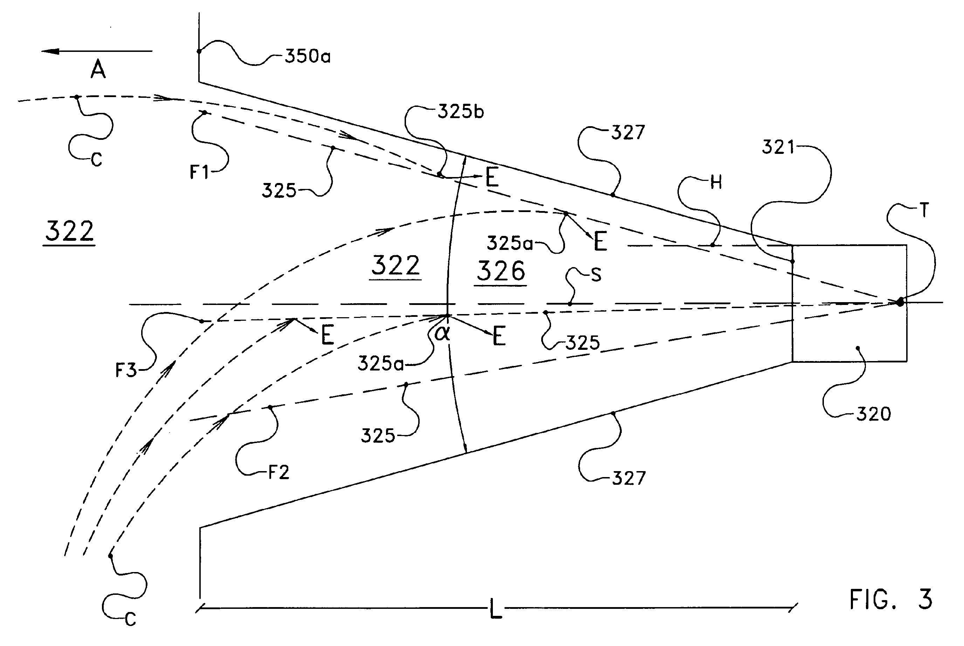

Figure 3 shows an arrangement in which the camera 320 with lens 321 is located rearwards with respect to the front surface 350a of the hood 350, in which case a tunnel 326 is formed which is confined by the upper wall and lower wall 327 and which has a conical section. By way of example, there are disposed in the tunnel 326 a number of groups of lamellas 325 whose ends are attached to non-shown side walls of the tunnel 326. The tunnel can have a length L of, for example, 0.5 m, with an angle α of 40 degrees or more between the walls 327. A group of lamellas 325 is located on the line F1, above the centre line S and for the greater part above the plane H. This group of lamellas 325 with the upper surfaces 325b then forming intercepting surfaces, is able to intercept manure drops which follow a slight ballistic trajectory and would otherwise be able to hit the front surface of the lens 321. These manure drops are bounced, direction E, up to against the wall 327 of the tunnel 326. A second group of lamellas is located along line F2 between the centre line S and the lower wall 327, and a third group of lamellas 325 is located just below the centre line S. The lines F1, F2, F3 and S intersect each other in point T. The lamellas 325 can additionally counteract caking on the tunnel walls.

The above-mentioned description serves to illustrate the operation of preferred embodiments of the invention, and not to limit the scope of the invention. On the basis of the above-mentioned explanation, it will be obvious for a person skilled in the art that there are many variations falling within the scope of the present invention.

## Claims

1. Unmanned self-propelled, and preferably self-steering, device (1) for carrying out activities in a space in which contaminants may occur, wherein the device comprises a frame and means for moving the device through the space, wherein the device further comprises a, advantageously optically active, detector (20;120;220;320) for detecting a body in a detection range (22;122;222;322) of the detector, which detector is provided with an outer surface (21;121;221;321) which is exposed and which is permeable for the detection function, wherein the frame is provided with screening means (25;125;225;325) which are stationary with respect to said outer surface for keeping said outer surface free from contaminants, wherein the screening means are provided with at least one screening member (25;125;225;325) which is located in the detection range and has a first intercepting surface (25a,b;125a,b;225a,b;325a,b) for intercepting contaminants moving towards the outer surface, wherein the detector has a detector centre line (S) which intersects the outer surface, **characterized in that** the first intercepting surface, when viewed in at least one, in particular vertical, sectional plane which contains the detector centre line, extends along a line (F,F1,F2,F3) which diverges with respect to the detector centre line in a direction away from the detector.

2. Device according to claim 1, wherein the screening means comprise a number of screening members (25;125;225;325), wherein the first intercepting surfaces (25a,b;125a,b;225a,b;325a,b) of the screening members, when viewed in said sectional plane which contains the detector centre line, are arranged along one or more lines (F, F1,F2,F3) which diverge with respect to the detector centre line in a direction away from the detector, wherein in particular the diverging lines (F, F1,F2,F3) intersect each other in a point (T), which is advantageously located on the detector centre line (S).

3. Device according to claim 2, wherein at least two of the first intercepting surfaces (25a,b;125a,b;225a,b;325a,b), in said sectional plane, are in alignment with each other on a line (F, F1,F2,F3) which diverges with respect to the detector centre line (S), in a direction away from the detector, and/or wherein at least two of the first intercepting surfaces (125a,b;225a,b;325a,b), in said sectional plane, are located on different lines (F1,F2,F3) which diverge with respect to the detector centre line, which lines are located in particular on both sides of the detector centre line, or are located on the same side of the detector centre line.

4. Device according to any one of the preceding claims, wherein the screening means comprise a number of screening members, wherein the first intercepting surfaces of at least two screening members occupy a mutually different angular position with respect to the detector centre line, when viewed in a plane of projection perpendicular to the detector centre line.

5. Device according to any one of the preceding claims, wherein the screening means comprise a number of screening members (25;125;225;325), wherein the intercepting surfaces (25a,b;125a,b;225a,b;325a,b) of at least two screening members leave an interspace between them.

6. Device according to any one of the preceding claims, wherein the screening member (25;125;225;325) is provided with a second intercepting surface (25b;125b;225b;325b; 25a;125a;225a;325a) which is oriented substantialy opposite to the first intercepting surface (25a;125a;225a;325a;25b;125b;225b;325b) and which is preferably substantially identical thereto.

7. Device according to claim 6, wherein the first and second intercepting surfaces (25a,b;125a,b;225a,b;325a,b), when viewed in at least one sectional plane which contains the detector centre line, are arranged along different lines which diverge with respect to the detector centre line in a direction away from the detector.

8. Device according to any one of the preceding claims 6 or 7, wherein the screening members (25;125;225;325) are lamella-shaped.

9. Device according to any one of the preceding claims, wherein the first intercepting surface or the first intercepting surfaces (25a;125a;225a;325a) are oriented for intercepting upwardly moving contaminants.

10. Device according to claim 9, wherein the outer surface (21;121;221;321) has an upper point and the intercepting surface is located below a horizontal plane (H) which intersects the upper point.

11. Device according to any one of claims 1 - 8, wherein the first intercepting surface or the first intercepting surfaces (25b;125b;225b;325b) are oriented for intercepting downwardly moving contaminants.

12. Device according to any one of the preceding claims, wherein the outer surface (21;121;221;321) has an upper point and wherein the intercepting surface (25a;125a;225a;325a) is disposed for intercepting contaminants moving upwardly towards the outer surface and is located below a horizontal plane (H) which contains the upper point.

13. Device according to any one of the preceding claims, provided with a carrier for moving material over the stable floor, wherein the carrier is advantageously a feed slide or a manure slide.

## Patentansprüche

1. Unbemannte, selbstfahrende und vorzugsweise selbstlenkende Vorrichtung (1) zum Durchführen von Aktivitäten in einem Raum, in welchem Verunreinigungen auftreten können, wobei die Vorrichtung einen Rahmen und Mittel zum Bewegen der Vorrichtung durch den Raum umfasst, wobei die Vorrichtung des Weiteren einen vorzugsweise optisch aktiven Detektor (20; 120; 220; 320) zum Erfassen eines Körpers in einem Erfassungsbereich (22; 122; 222; 322) des Detektors umfasst, wobei der Detektor mit einer äußeren Oberfläche (21; 121; 221; 321) ausgestattet ist, welche frei liegt und welche durchlässig für die Erfassungsfunktion ist, wobei der Rahmen mit Abschirmmitteln (25; 125; 225; 325) ausgestattet ist, welche in Bezug auf die äußere Oberfläche stationär sind, um die äußere Oberfläche frei von Verunreinigungen zu halten, wobei die Abschirmmittel mit wenigstens einem Abschirmelement (25; 125; 225; 325) versehen sind, welches im Erfassungsbereich angeordnet ist und eine erste Abfangfläche (25a, b; 125a, b; 225a, b; 325a, b) zum Abfangen der sich zur äußeren Oberfläche bewegenden Verunreinigungen, wobei der Detektor eine Detektormittellinie (S) aufweist, welche die äußere Oberfläche schneidet,
**dadurch gekennzeichnet, dass** sich die erste Abfangfläche, wenn in wenigstens einer, insbesondere vertikalen Schnittebene betrachtet, welche die Detektormittellinie enthält, entlang einer Linie (F, F1, F2, F3) erstreckt, welche in Bezug auf die Detektormittellinie in Richtung fort vom Detektor divergieren.

2. Vorrichtung nach Anspruch 1,
wobei die Abschirmmittel eine Anzahl von Abschirmelementen (25; 125; 225; 325) umfassen, wobei die ersten Abfangflächen (25a, b; 125a, b; 225a, b; 325a, b) der Abschirmelemente, wenn in der Schnittebene betrachtet, welche die Detektormittellinie enthält, entlang einer oder mehrerer Linien (F, F1, F2, F3) angeordnet sind, welche in Bezug auf die Detektormittellinie in Richtung fort vom Detektor divergieren, wobei insbesondere die divergierenden Linien (F, F1, F2, F3) sich jeweils in einem Punkt (T) schneiden, welcher vorteilhafterweise auf der Detektormittellinie (S) angeordnet ist.

3. Vorrichtung nach Anspruch 2,
wobei wenigstens zwei der ersten Abfangflächen (25a, b; 125a, b; 225a, b; 325a, b) in der Schnittebene miteinander auf einer Linie (F, F1, F2, F3), welche in Bezug auf die Detektormittellinie (S) in Richtung fort vom Detektor divergieren, fluchten und/oder wobei wenigstens zwei der ersten Abfangflächen (125a, b; 225a, b; 325a, b) in der Schnittebene auf unterschiedlichen Linien (F1, F2, F3) angeordnet sind, welche in Bezug auf die Detektormittellinie in Richtung fort vom Detektor divergieren, wobei diese Linien insbesondere auf beiden Seiten der Detektormittellinie angeordnet sind oder auf derselben Seite der Detektormittellinie angeordnet sind.

4. Vorrichtung nach einem der vorhergehenden Ansprüche,
wobei die Abschirmmittel eine Anzahl von Abschirmelementen umfassen, wobei die ersten Abfangflächen der wenigstens zwei Abschirmelemente in einer Projektionsebene der Detektormittellinie betrachtet eine gegenseitig unterschiedliche Winkelposition in Bezug auf die Detektormittellinie einnehmen.

5. Vorrichtung nach einem der vorhergehenden Ansprüche,
wobei die Abschirmmittel eine Anzahl von Abschirmelementen (25; 125; 225; 325) umfassen, wobei die Abfangflächen (25a, b; 125a, b; 225a, b; 325a, b) der wenigstens zwei Abschirmelemente einen Abstand zwischen sich lassen.

6. Vorrichtung nach einem der vorhergehenden Ansprüche,
wobei das Abschirmelement (25; 125; 225; 325) mit einer zweiten Abfangfläche (25b; 125b; 225b; 325b; 25a; 125a; 225a; 325a) ausgestattet ist, welche im Wesentlichen entgegengesetzt zur ersten Abfangfläche (25a; 125a; 225a; 325a; 25b; 125b; 225b; 325b) ausgerichtet ist und welche vorzugsweise im Wesentlichen dazu identisch ist.

7. Vorrichtung nach Anspruch 6,
wobei die ersten und zweiten Abfangflächen (25a, b; 125a, b; 225a, b; 325a, b), wenn in wenigstens einer Schnittebene betrachtet, welche die Detektormittellinie umfasst, entlang unterschiedlicher Linien angeordnet sind, welche in Bezug auf die Detektormittellinie in Richtung fort vom Detektor divergieren.

8. Vorrichtung nach einem der Ansprüche 6 oder 7,
wobei die Abschirmelemente (25; 125; 225; 325) lamellenförmig sind.

9. Vorrichtung nach einem der vorhergehenden Ansprüche,
wobei die erste Abfangfläche oder die ersten Abfangflächen (25a; 125a; 225a; 325a) so ausgerichtet sind, um sich nach oben bewegende Verunreinigungen abzufangen.

10. Vorrichtung nach Anspruch 9,
wobei die äußere Oberfläche (21; 121; 221; 321) einen oberen Punkt aufweist und die Abfangfläche unterhalb einer horizontalen Ebene (H) angeordnet ist, welche den oberen Punkt schneidet.

11. Vorrichtung nach einem der Ansprüche 1 bis 8,
wobei die erste Abfangfläche oder die ersten Abfangflächen (25b; 125b; 225b; 325b) so ausgerichtet sind, um sich nach unten bewegende Verunreinigungen abzufangen.

12. Vorrichtung nach einem der vorhergehenden Ansprüche,
wobei die äußere Oberfläche (21; 121; 221; 321) einen oberen Punkt aufweist und wobei die Abfangfläche (25a; 125a; 225a; 325a) so angeordnet ist, um Verunreinigungen, welche sich nach oben in Richtung der äußeren Oberfläche bewegen, abzufangen, und wobei sie unterhalb einer horizontalen Ebene (H) angeordnet ist, welche den oberen Punkt enthält.

13. Vorrichtung nach einem der vorhergehenden Ansprüche,
ausgestattet mit einem Träger zum Bewegen von Material über den Stallboden, wobei der Träger vorteilhafterweise ein Futterschieber oder ein Dungschieber ist.

## Revendications

1. Dispositif sans pilote autopropulsé et de préférence auto-directeur (1) pour exécuter des activités dans un espace dans lequel des contaminants peuvent se produire, dans lequel le dispositif comprend un châssis et des moyens pour déplacer le dispositif dans l'espace, dans lequel le dispositif comprend en outre un détecteur, avantageusement actif optiquement, (20 ; 120 ; 220 ; 320) pour détecter un corps dans une plage de détection (22 ; 122 ; 222 ; 322) du détecteur, lequel détecteur est pourvu d'une surface extérieure (21 ; 121 ; 221 ; 321) qui est exposée et qui est perméable pour la fonction de détection, dans lequel le châssis est muni de moyens de protection (25 ; 125 ; 225 ; 325) qui sont fixes par rapport à ladite surface extérieure pour maintenir ladite surface extérieure dépourvue de contaminants, dans lequel les moyens de protection sont pourvus d'au moins un élément de protection (25 ; 125 ; 225 ; 325) qui est situé dans la plage de détection et comporte une première surface d'interception (25a,b ; 125a,b ; 225a,b ; 325a,b) pour intercepter des contaminants se déplaçant vers la surface extérieure, dans lequel le détecteur a une ligne centrale de détecteur (S) qui coupe la surface extérieure, **caractérisé en ce que** la première surface d'interception, quand elle est vue dans au moins un plan de coupe, en particulier vertical, qui contient la ligne centrale de détecteur, s'étend suivant une ligne (F, F1, F2, F3) qui diverge par rapport à la ligne centrale de détecteur dans une direction s'éloignant du détecteur.

2. Dispositif selon la revendication 1, dans lequel les moyens de protection comprennent une pluralité d'éléments de protection (25 ; 125 ; 225 ; 325), dans lequel les premières surfaces d'interception (25a,b ; 125a,b ; 225a,b ; 325a,b) des éléments de protection, quand elles sont vues dans ledit plan de coupe qui contient la ligne centrale de détecteur, sont agencées suivant une ou plusieurs lignes (F, F1, F2, F3) qui divergent par rapport à la ligne centrale de détecteur dans une direction s'éloignant du détecteur, dans lequel, en particulier, les lignes divergentes (F, F1, F2, F3) se coupent entre elles à un point (T), qui est avantageusement situé sur la ligne centrale de détecteur (S).

3. Dispositif selon la revendication 2, dans lequel au moins deux des premières surfaces d'interception (25a,b ; 125a,b ; 225a,b ; 325a,b), dans ledit plan de coupe, sont en alignement entre elles sur une ligne (F, F1, F2, F3) qui diverge par rapport à la ligne centrale de détecteur (S), dans une direction s'éloignant du détecteur, et/ou dans lequel au moins deux des premières surfaces d'interception (125a,b ; 225a,b ; 325a,b), dans ledit plan de coupe, sont situées sur des lignes différentes (F1, F2, F3) qui divergent par rapport à la ligne centrale de détecteur, lesquelles lignes sont situées en particulier des deux côtés de la ligne centrale de détecteur ou sont situées du même côté de la ligne centrale de détecteur.

4. Dispositif selon l'une quelconque des revendications précédentes, dans lequel les moyens de protection comprennent une pluralité d'éléments de protection, dans lequel les premières surfaces d'interception d'au moins deux éléments de protection occupent une position angulaire mutuellement différente par rapport à la ligne centrale de détecteur, quand elles sont vues dans un plan de projection perpendiculaire à la ligne centrale de détecteur.

5. Dispositif selon l'une quelconque des revendications précédentes, dans lequel les moyens de protection comprennent une pluralité d'éléments de protection (25 ; 125 ; 225 ; 325), dans lequel les surfaces d'interception (25a,b ; 125a,b ; 225a,b ; 325a,b) d'au moins deux éléments de protection ont un espace intermédiaire entre elles.

6. Dispositif selon l'une quelconque des revendications précédentes, dans lequel l'élément de protection (25 ; 125 ; 225 ; 325) est pourvu d'une deuxième surface d'interception (25b ; 125b ; 225b ; 325b ; 25a ; 125a ; 225a ; 325a) qui est orientée de manière sensiblement opposée à la première surface d'interception (25a ; 125a ; 225a ; 325a ; 25b ; 125b ; 225b ; 325b) et qui est de préférence sensiblement identique à celle-ci.

7. Dispositif selon la revendication 6, dans lequel les premières et deuxièmes surfaces d'interception (25a,b ; 125a,b ; 225a,b ; 325a,b), quand elles sont vues dans au moins un plan de coupe qui contient la ligne centrale de détecteur, sont agencées suivant des lignes différentes qui divergent par rapport à la ligne centrale de détecteur dans une direction s'éloignant du détecteur.

8. Dispositif selon l'une quelconque des revendications précédentes 6 ou 7, dans lequel les éléments de protection (25 ; 125 ; 225 ; 325) présentant la forme de lamelles.

9. Dispositif selon l'une quelconque des revendications précédentes, dans lequel la première surface d'interception ou les premières surfaces d'interception (25a ; 125a ; 225a ; 325a) sont orientées pour intercepter des contaminants se déplaçant vers le haut.

10. Dispositif selon la revendication 9, dans lequel la surface extérieure (21 ; 121 ; 221 ; 321) a un point supérieur et la surface d'interception est située au-dessous d'un plan horizontal (H) qui coupe le point supérieur.

11. Dispositif selon l'une quelconque des revendications 1 à 8, dans lequel la première surface d'interception ou les premières surfaces d'interception (25b ; 125b ; 225b ; 325b) sont orientées pour intercepter des contaminants se déplaçant vers le bas.

12. Dispositif selon l'une quelconque des revendications précédentes, dans lequel la surface extérieure (21 ; 121 ; 221 ; 321) a un point supérieur et dans lequel la surface d'interception (25a ; 125a ; 225a ; 325a) est disposée pour intercepter des contaminants se déplaçant vers le haut vers la surface extérieure et est située au-dessous d'un plan horizontal (H) qui contient le point supérieur.

13. Dispositif selon l'une quelconque des revendications précédentes, muni d'un transporteur pour déplacer la matière sur le sol de l'étable, dans lequel le transporteur est avantageusement un chariot d'alimentation ou un chariot de fumier.
